# EUROPÄISCHE PATENTANMELDUNG

(11) **EP 0 981 234 A2**
(43) Veröffentlichungstag der Anmeldung: **23.02.2000**
(21) Anmeldenummer: 98123676.3
(22) Anmeldetag: 11.12.1998
(51) Int. Cl.: H04M 3/42, H04M 11/06

(54) **Verknüpfung heterogener Systeme, insbesondere von TKA und EDVA**

(30) Priorität: 19.08.1998 DE 29814843 U
(71) Anmelder: CSB-System Software-Entwicklung & Unternehmensberatung AG, 52511 Geilenkirchen (DE)
(72) Erfinder: Schimitzek, Peter, Dr., 52511 Geilenkirchen (DE)
(74) Vertreter: Haussingen, Peter

(57) **Zusammenfassung**

Die Erfindung bezeichnet eine Verknüpfung heterogener Systeme [(2), (4)] über einen Schnittstellenrechner (1), insbesondere von TKA und EDVA, wobei optional zwischen den einzelnen Telekommunikationsendgeräten (3) und den Datenendgeräten (5) zumindest teilweise eine räumliche Zuordnung besteht. Zur Realisierung einer Schnittstelle für heterogene Systeme [(2), (4)] dessen Schnittstellen zu den konkreten Systemen unter Wahrung des vollen Funktionsumfangs ohne programmtechnische Änderungen als solche spezifizierbar sind, wird die heterogene systemspezifische Sprache der heterogenen Systeme [(2), (4)] bezüglich ihrer Syntax über Konverter (6) auf eine Zwischensprache mit einer gemeinsamen Basiselementdatenstruktur (7) abgebildet, alle über die spezifische Sprache erzeugbaren bzw. erkennbaren Systemzustände in Form einer als Graphen (12) ausgebildeten Klasse (8) dargestellt und behandelt, die spezifischen Klassen (8) bei der Initialisierung des Schnittstellenrechners (1) generiert und fortan ereignisgesteuert von dem Ereignishändler (9) überwacht und aktualisiert.

## Beschreibung

Die Erfindung bezeichnet eine Verknüpfung heterogener Systeme über einen Schnittstellenrechner, insbesondere von TKA (Telekommunikationsanlage) und EDVA (elektronische Datenverarbeitungsanlage), wobei optional zwischen den einzelnen Telekommunikationsendgeräten und den Datenendgeräten zumindest teilweise eine räumliche Zuordnung besteht.

Die Internationale Patentklassifikation (IPC) ordnet die elektrische Nachrichtentechnik in die Klasse H04 ein, speziell den Fernsprechverkehr in H04M und Fernsprechsysteme für die Verbindung mit anderen elektrischen Systemen in H04M 11/00. Spezifische Schnittstellenrechner von Datenverarbeitungsanlagen werden in G06F 17/60 bzw. G06F 19/00 behandelt.

Die Druckschrift DE4330031C2 offenbart ein serverbasiertes CTI-System (Computer-Telefon-Integration) zur Steuerung der TKA und der EDVA über einen als dazwischen geschaltete dritte intelligente Komponente wirkenden CTI-Rechner. Zwischen den Telekommunikationsendgeräten und den Datenendgeräten besteht eine räumliche Zuordnung. Die mit dieser Lösung erzielte Überwachung der jeweiligen Ereignisse ermöglichen eine betriebssystemunabhängige Verknüpfung bei größtmöglicher Funktionalität der Anlage. Nachteilig ist jedoch die - wenn auch geringfügige - notwendig programmtechnische Änderung der Schnittstellen zur TKA und/oder EDVA, insbesondere bei geändertem Funktionsumfang dieser, welcher sich auf die jeweilige Sprache auswirkt.

Trotz bestehender, branchenweiter oder firmeninterner, Standards bezüglich der für die externe Verknüpfung eingesetzten Sprachen, ergeben sich bedingt durch die stetige Weiterentwicklung einer TKA und/oder EDVA ständig einige Änderungen bezüglich der Syntax (die Regeln, die Struktur und Inhalt der Anweisungen bestimmen) und/oder der Semantik (Beziehung zwischen Wörtern oder Symbolen und ihren zugeordneten Bedeutungen).

Die Aufgabe der Erfindung besteht unter Beseitigung der Nachteile des Standes der Technik in der Realisierung einer Schnittstelle für heterogene Systeme über einen Schnittstellenrechner - insbesondere eines CTI-Rechners - dessen Schnittstellen zu den konkreten Systemen - insbesondere der TKA und/oder EDVA - unter Wahrung des vollen Funktionsumfangs ohne programmtechnische Änderungen als solche spezifizierbar sind. Ein weiterer wesentlicher Aspekt der Aufgabe ist die selbsttätige Initialisierung des Schnittstellenrechner bzw. CTI-Rechners bezüglich der aktuellen Zustände der heterogenen Systeme bzw. TKA und/oder EDVA.

Die Aufgabe wird durch die im Patentanspruch 1 aufgeführten Merkmale gelöst. Bevorzugte Weiterbildungen ergeben sich aus den Unteransprüchen.

Das Wesen der Erfindung besteht in der programmtechnischen Abbildung und Behandlung der über die heterogene systemspezifische Sprache - insbesondere der TKA- und EDVA-spezifischen Sprache - für externe Verknüpfungen erzeugbaren bzw. erkennbaren Systemzustände in Form einer als Graphen ausgebildeten Daten- und Funktionsstruktur, kurz Klasse, wobei die spezifische Sprache bezüglich ihrer Syntax über Konverter auf eine Zwischensprache mit einer gemeinsamen Basiselementdatenstruktur abgebildet wird. Dabei bilden für eine spezifische Sprache in einer spezifischen Klasse jeweils die Knoten die über die Syntax erzeugbaren bzw. erkennbaren Systemzustände und die Kanten die über die Semantik festgelegten zulässigen Änderungen dieser ab. Mittels einer geeigneten grafischen Nutzeroberfläche ist in einfachster Weise die Darstellung der Objekte Knoten und Kanten des Graphen bzw. der über die korrespondierende Sprache erzeugbaren bzw. erkennbaren Systemzustände sowie objektorientiert deren Modifikation realisierbar. Der aktuelle Zustand wird als Status jeweils genau einem Knoten des Graphen zugeordnet. Zur stets aktuellen Abbildung der Zustände der heterogenen Systeme - insbesondere der TKA und/oder der EDVA - erfolgt bei der Initialisierung des Schnittstellenrechners bezüglich der heterogenen Systeme - insbesondere des CTI-Rechners bezüglich der TKA und/oder der EDVA - eine selbständige Abtrage der momentan aktiven Geräte und/oder Rufe, welche jeweils als virtuelle Abbilder dessen als aktuelle Zustände je eines zugeordneten, die über die korrespondierende Sprache erzeugbaren bzw. erkennbaren Systemzustände darstellenden, Graphen in Form von Klassen generiert und fortan ereignisgesteuert überwacht und aktualisiert werden.

Die Vorteile der Erfindung bestehen insbesondere in der erzielten Vereinfachung bezüglich der notwendigen Anpassung des eingesetzten Schnittstellenrechners - insbesondere des CTI-Rechners - zur Erhaltung des vollen Funktionsumfangs bei den stets seitens der Hersteller der heterogenen Systeme - insbesondere der TKA bzw. EDVA - vorgenommenen Modifikationen des Sprach- und Leistungsumfangs zur Steuerung bzw. Ausgabe der Systemzustände.

Eine vorteilhafte Weiterbildung der Erfindung besteht in der Einbindung eines zusätzlichen Schnittstellenrechners - insbesondere eines Sprachsystems - in ein heterogenes System - insbesondere der TKA bzw. EDVA -. Da die jeweilige systemseitige Sprache zwischen dem Sprachsystem und dem CTI-Rechner die gleiche ist, ist das Sprachsystem in jede beliebige TKA integrationsfähig. Der CTI-Rechner verarbeitet die verschiedenen TKA-Protokolle und die entsprechenden LAN-seitigen Protokolle gleichermaßen. Somit kann der Anrufer automatisch identifiziert und kundenbezogen angesprochen bzw. abgefragt werden. Durch die Einbindung des Sprachsystems können alle Funktionen des EDV-Systems und der TKA eingesetzt werden. Bei Ausfall des Sprachsystems bleibt das EDV-System und die TKA voll funktionsfähig. Weiterhin kann der Anrufende sprachlich erfahren, daß das Endziel besetzt ist und in der Zwischenzeit spezifisch informiert werden oder der Angerufene während eines anliegenden Gespräches die Information erhalten, daß er von dem Anrufenden gewünscht wird. Darüber hinaus kann das Endziel in der Weise überwacht werden, daß bei frei werdendem Endziel die Verbindung mit dem Anrufer selbständig hergestellt wird.

Besonders vorteilhaft ist weiterhin die Verbindung des CTI-Rechners mit einem Unternehmensführungssystem, welches über ein Kontaktmanagementsystem gesteuert dem Anrufenden und/oder dem Angerufenen spezifische Zusatzinformationen bereitstellt und vorteilhaft den Kontakt für einen vorgegebenen Zeitraum in einer Protokolldatenbank registriert. Zu diesem Zweck greift das Kontaktmanagementsystem auf die miteinander verknüpften Grundelemente eines rechnergestützten Warenwirtschaftssystems - Adressen, Artikel, Konditionen, Verfahren - zurück, welche den stets aktuellen Zustand des Kontaktes (Personen, Unternehmen, Systeme etc.) repräsentieren. Somit stehen zur Unterstützung der Kommunikation relevante Unternehmensdaten, entsprechend der Teilnehmer kanalisiert, stets aktuell zur Verfügung.

Die Erfindung wird als Ausführungsbeispiel an Hand der Verknüpfung einer TKA und einer EDVA mit
Fig. 1 als Verknüpfung des CTI-Rechners
Fig. 2 als Darstellung der über die Sprache erzeugbaren bzw. erkennbaren Systemzustände in Form einer als Graph ausgebildeten Klasse
Fig. 3 als Initialisierungsprinzip des CTI-Rechners
Fig. 4 als Programmablaufplan des CTI-Rechners
Fig. 5 als Verknüpfung mit einem Sprachsystem
Fig. 6 als Verknüpfung mit einem Unternehmensführungssystem näher erläutert.

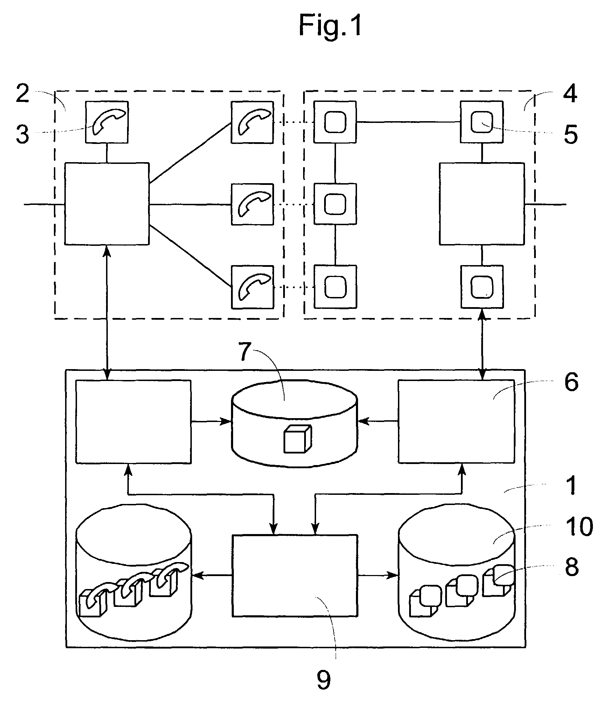

Nach Fig. 1 ist ein CTI-Rechner 1 sowohl mit einer optional am übergeordneten Netz angebundenen TKA 2, inklusive Telekommunikationsendgeräten 3 am internen Telekommunikationsnetz, als auch mit einer optional am übergeordneten Netz angebundenen EDVA 4, inklusive Datenendgeräten 5 am LAN (Local Area Network), verbunden, wobei teilweise eine räumliche Zuordnung zwischen den Telekommunikationsendgeräten 3 und den Datenendgeräten 5 besteht. Die Verknüpfung der TKA 2 bzw. der EDVA 4 mit dem CTI-Rechner 1 erfolgt vorteilhaft über eine Datenverbindung auf Layer IV (Transportschicht) des OSI (Open Systems Interconnection) Schichtenmodells, bspw. über TCP (Transmission Control Protocol), UDP(User Datagram Protocol), S0(ISDN-Schnittstelle). Über einen der konkreten Datenverbindung auf Layer IV des OST Schichtenmodelis zugeordneten Konverter 6, der auf eine Basiselementdatenstruktur 7 einer übergeordneten Zwischensprache auf Layer V (Kommunikationssteuerschicht) des OSI Schichtenmodells, bspw. TAPI (Telephony Application Programming Interface), CSTA (Computer supported telecommunications applications) zugreift, wobei die Basiselementdatenstruktur 7 die elementaren Bestandteile der Syntax aller Sprachen zur Verknüpfung mit der TKA 2 und der EDVA 4 umfaßt, wird die Syntax der spezifischen Sprache der Verknüpfung jeweils in die Zwischensprache übersetzt. Jeder über die spezifische Sprache der TKA 2 bzw. der EDVA 4 beschreibbare Zustand bzw. dessen Änderung läßt sich innerhalb einer spezifischen Klasse 8 mit den Basiselementen der Zwischensprache bezüglich der Syntax und Semantik (mathematisch) eineindeutig abbilden, wodurch weder bei der Hin- noch bei der Rücktransformation in die Zwischensprache Informationsverluste auftreten. Dabei wird stets nur eine Teilmenge der über die Basiselemente der Zwischensprache möglichen Sprachelemente realisiert. Somit verknüpft die einheitliche Zwischensprache in der Kommunikationsschicht des CTI-Rechners 1 die TKA, 2 bzw. EDVA 4 unabhängig vom jeweils spezifischen Telefonprotokoll (TAPI, CSTA), Treiberprotokoll (TCP, UDP, S0) oder Absendertyp (TKA, EDVA). Vorteilhaft werden bezüglich der spezifischen TKA 2 bzw. EDVA 4 die aktuellen Einstellungen in einem Konfigurationsfile in dem CTI-Rechner 1 gespeichert. Die sich bezüglich der Basiselemente überschneidenden Mengenbereiche der spezifischen Teilmenge der TKA 2 mit der spezifischen Teilmenge der EDVA 4 ermöglicht stets den vollen Funktionsumfang zur Verknüpfung der TKA 2 mit der EDVA 4.

Die in die Zwischensprache übersetzten mit der Zeit auftretenden Ereignisse (Events) der TKA 2 bzw. der EDVA 4 werden von dem CTI-Rechner 1 über einen Ereignishändler 9 behandelt, bspw. in Form einer interruptgesteuert abzuarbeitenden Behandlungsroutine - bei Windows NT der Messagehändler der Verwaltungsebene -. Dabei signalisiert jedes Ereignis eine Änderung im Zustand der TKA 2 bzw. der EDVA 4. Abhängig von der spezifischen TKA 2 oder EDVA 4 erfolgen die Ereignisse entweder gerätebezogen oder rufbezogen. Jedes Ereignis ändert den Zustand mindestens einer die Zustandsänderung des Gerätes bzw. des Rufes beinhaltenden Klasse 8. Auf diese Weise werden nach einer erfolgreichen Initialisierung des CTI-Rechners 1 stets gerätebezogen oder rufbezogen sowohl alle erzeugbaren bzw. erkennbaren Systemzustände der TKA 2 als auch der EDVA 4 virtuell in je einem Zustandsspeicher 10 mit den jeweils spezifischen Klassen 8 gespeichert, indem bei einem Ereignis entsprechend mindestens eine spezifische Klasse 8 geändert, und optional mindestens eine spezifische Klasse 8 erzeugt oder vernichtet wird. Die Menge aller spezifischen Klassen 8 eines Zustandsspeichers 10 repräsentiert virtuell vollständig den über Ereignisse erzielbaren Systemzustand der TKA 2 bzw. der EDVA 4.

Umgekehrt ermöglicht die virtuelle Abbildung der Systemzustände der TKA 2 bzw. der EDVA 4 über spezifische Klassen 8 im Zustandsspeichers 10 bei Kenntnis möglicher Änderungen dieser Systemzustände, welche über die Semantik der spezifischen Sprache bekannt und somit ebenfalls in der zugeordneten spezifischen Teilmenge der Zwischensprache erfaßt sind, die gezielte Änderung des Systemzustands der TKA 2 bzw. der EDVA 4 über vom CTI-Rechner 1 generierte Befehle. Solche Befehle können als Folge von Änderungen einer aktuellen Klasse 8 generiert werden. Die durch diesen Befehl selbst erzeugte Änderung einer weiteren spezifischen Klasse 8 wird ebenfalls als Ereignis aufgefaßt und wie oben beschrieben behandelt.

Ein wesentlicher Aspekt besteht in der Generierung von Befehlen für die TKA 2 als Folge von Änderungen einer spezifischen Klasse 8 der EDVA 4 und umgekehrt. Dadurch wird auf Basis spezifischer Klassen 8 eine Schnittstelle ausgebildet, die sich aus der Durchschnittsmenge der jeweils aus den Basiselementen der TKA 2 und der EDVA 4 aufgebauten möglichen Zuständen und deren möglichen Änderungen ergibt. Bei einer Benutzung der Schittstelle wird jeweils mindestens eine spezifische Klasse 8 der TKA 2 in ihrer Funktion als Quellstruktur/Zielstruktur und mindestens eine spezifische Klasse 8 der EDVA 4 in ihrer Funktion als Zielstruktur /Quellstruktur verändert.

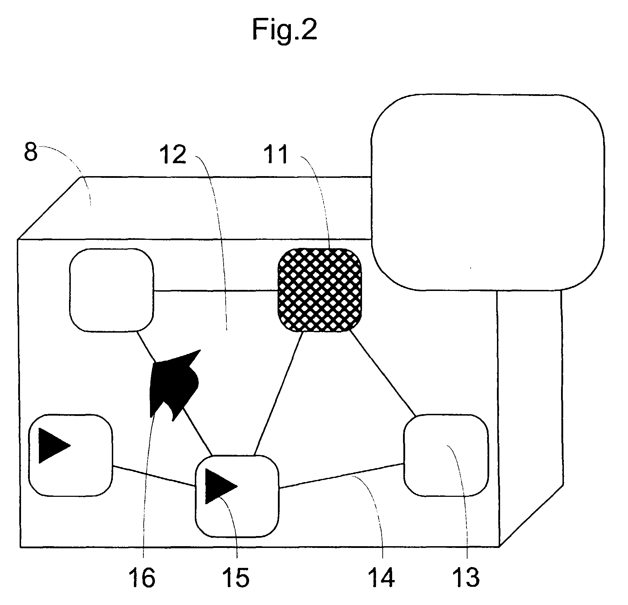

Nach Fig. 2 ist eine spezifische Klasse 8 des Zustandsspeichers 10 zur Darstellung eines aktuellen Zustands 11 als ein Graph 12 mit Knoten 13 und Kanten 14 aufgebaut, wobei die Kanten 14 jeweils genau zwei Knoten verbinden und genau ein Knoten 13 den Status des aktuellen Zustands 11 besitzt. Die Knoten 13, welche einen möglichen Systemzustand repräsentieren, können optional mit Attributen 15 (aktueller Zustand, Fehler, NULL) versehen sein. Die Kanten 14, welche eine mögliche Änderung des Systemzustands repräsentieren, können optional mit einer Funktion 16 versehen sein, welche zumeist einen Befehl auslöst der vor dem Zustandswechsel abgearbeitet wird. Vorteilhaft werden die spezifischen Klassen 8 jeweils in Form von Graphen 12 objektorientiert als Instanzen einer Klasse_Graph generiert und behandelt, welche ihrerseits Instanzen einer Klasse_Knoten und Klasse_Kanten beinhaltet. Die bildliche Darstellung der Sprache selbst über die damit jeweilig erzeugbaren bzw. erkennbaren möglichen Systemzustände und deren Änderungen bzw. deren Modifikation bei der Anpassung der Sprache erfolgt vorteilhaft objektbezogen über geeignete Darstellungsprogramme bzw. Modifizierungsprogramme.

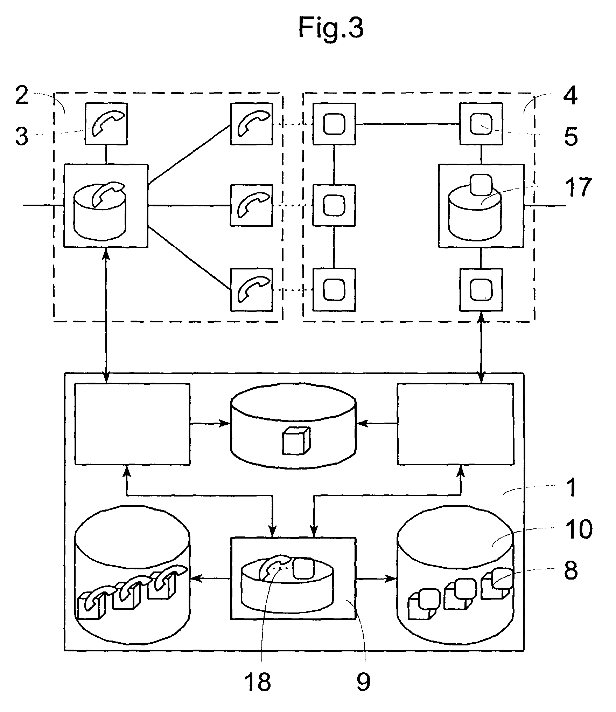

Nach Fig. 3 erfolgt die Initialisierung des CTI-Rechners 1 durch seine Fähigkeit, Ereignisse bzw. Steuerbefehle für die TKA 2 und die EDVA 4 zu empfangen bzw. zu senden. Bei der Herstellung der Funktionsbereitschaft wird der aktuelle Systemzustand der Installation beider heterogener Systeme [2, 4] vom CTI-Rechners 1 ausgelesen und ein virtuelles Abbild dieser Konfiguration sowie der zugehörigen Statusangaben im Zustandsspeicher 9 erzeugt.

Besonders vorteilhaft erzeugt optional der CTI-Rechners 1 unter Bezugnahme von Datenbanken 17 (DB), die EDVA spezifisch bspw. Loggin - Name, TKA spezifisch, bspw. Name - phys. TN (Telefonnummer), persönlich, bsw. Name - pers. TB (Telefonbuch) sind, und in der EDVA und/oder in der TKA verfügbar sind, selbständig unter Verwendung des virtuellen Abbildes eine logische Verknüpfung von Kommunikationsdaten 18 der EDVA-Welt mit denen der TKA-Welt. Entsprechend dieser logisch verknüpften Kommunikationsdaten 18 werden vom Ereignishändler 9 des CTI-Rechners 1 die notwendigen Konfigurations- und Statusänderungen in den einzelnen heterogenen Systemen [2, 4] vorgenommen und die Routinen für eine übergreifende Kommunikation angepaßt, ohne das ein manueller Eingriff erfolgen muß.

Durch eine Überwachung beider heterogener Systeme [2, 4] ist der Ereignishändler 9 des CTI-Rechners 1 in der Lage, ereignisgesteuert jede Veränderung der Systemkonfiguration sowie des Systemzustands zu registrieren und diese Änderung in das eigene über die spezifischen Klassen 8 dargestellte virtuelle Abbild der heterogenen Systeme [2, 4] sowie optional in die logisch verknüpften Kommunikationsdaten 18 zu übertragen. Eine Kommunikationsverbindung wird optional entsprechend der Rufnummer, der Diensteidentifikation (Sprache, Daten) und der logischen Verknüpfung der Kommunikationsdaten 18 im Ereignishändler 9 des CTI-Rechners 1 geschaltet. Dieses Ausführungsbeispiel zeigt die Möglichkeit auf, bei vollständiger Unabhängigkeit beider heterogener Systeme [2, 4] (EDVA und TKA), eine Kommunikationsverbindung sowohl innerhalb, als auch zwischen den heterogenen Systemen [2, 4] auf Grundlage logischer Kommunikationsdaten 18 zu händeln. Somit ist es bsw. möglich, durch das Einloggen einer Person an einem beliebigen Endgerät [3, 5], alle für diese Person (z.B. durch seine persönliche Rufnummer spezifizierte Angabe) bestimmte Kommunikationsverbindungen, zu seinem AP (Arbeitsplatz), welcher aus dem räumlich korrelierten Telekommunikationsendgerät 3 und dem Datenendgerät 5 besteht, zu leiten.

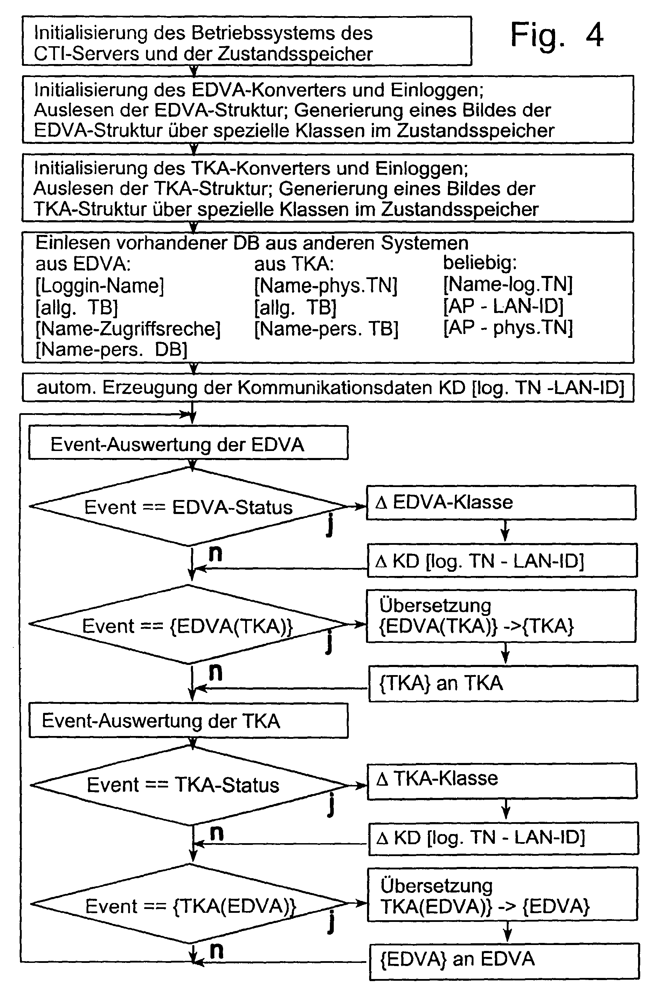

Ein möglicher Programmablaufplan des CTI-Rechners ist in Fig. 4 dargestellt. Nach der Initialisierung des Betriebssystems des CTI-Rechners und der Initialisierung der Zustandsspeicher erfolgt die Initialisierung des EDVA-Konverters, das Einloggen in die EDVA, das Auslesen des EDVA-Struktur sowie das Generieren eines virtuellen Bildes der EDVA-Struktur über spezifische Klassen im Zustandsspeicher. Analog erfolgt die Initialisierung des TKA-Konverters, das Einloggen in die TKA, das Auslesen der TKA-Struktur sowie das Generieren eines virtuellen Bildes der TKA-Struktur über spezifische Klassen im Zustandsspeicher. Anschließend erfolgt ein Einlesen von diversen DB's (aus der EDVA, von der TKA oder an sonstiger Stelle). Mit Hilfe dieser DB's wird innerhalb des CTI-Rechners die virtuelle Kommunikationsdatenbank KD aufgebaut. Diese Kommunikationsdatenbank enthält alle Informationen, die für eine gezielte Verknüpfung von Kommunikationsverbindungen (Daten, Sprache), basierend auf dem Verbindungsstatus, dem identifizierten Anrufer und der angerufenen Person, dem die Rufnummer zugeordnet ist, notwendig sind, bsw. Verknüpfungen der Art: log. TN - LAN-ID. Neben einer Rufverteilung, Rufumleitung, basierend auf zugeordneten weiteren TN, erfolgt durch die Verwendung der logischen TN stets eine Verbindung zu dem zugeordneten Endgerät an dem AP (Arbeitsplatz), an welchem sich die zugehörige Person aktuell identifizierte, bsw. mit seinem Loggin zur Identifizierung an einer EDVA mit spezifischer LAN-ID. In der Grundkonfiguration (Person ist an seinem Stammarbeitsplatz und keine Rufumleitung ist aktiv) entspricht die logische TN im allgemeinen der physischen TN, die in der TKA festgelegt ist. Damit ist die Betriebsbereitschaft des CTI-Rechners bei der Initialisierung ohne fremdes Zutun hergestellt, und eine Endlosschleife, die jede Änderung des Zustands registriert und berücksichtigt wird abgearbeitet. Diese beinhaltet eine Ereignisauswertung der EDVA und eine Ereignisauswertung des TKA. Wird in der Ereignisauswertung der EDVA eine Änderung des EDVA-Status registriert, wird diese Änderung ebenfalls in dem virtuellen Abbild der EDVA als spezifische Klasse im Zustandsspeicher vorgenommen, worauf sich eventuell eine Änderung in der virtuellen Kommunikationsdatenbank KD anschließt. Wird ein TKA-Steuerbefehl registriert, wird dieser entsprechend der Schnittstellenspezifikation übersetzt und an die TKA übermittelt, die diesen Befehl ausführt. Analog erfolgt die Ereignisauswertung des TKA. Bei der Änderung der TKA-Struktur erfolgt die Änderung des virtuellen Abbildes der TKA-Struktur als Klasse und die mögliche Änderung der Kommunikationsdatenbank KD im CTI-Rechner, sowie bei einem EDVA-Befehl dessen Übersetzung und Übermittlung an die EDVA. Anschließend wird am Schleifenanfang erneut eine Ereignisauswertung der EDVA vorgenommen. Alternativ zur Behandlungsschleife ist auch eine ereignisgesteuerte Interruptbehandlung möglich.

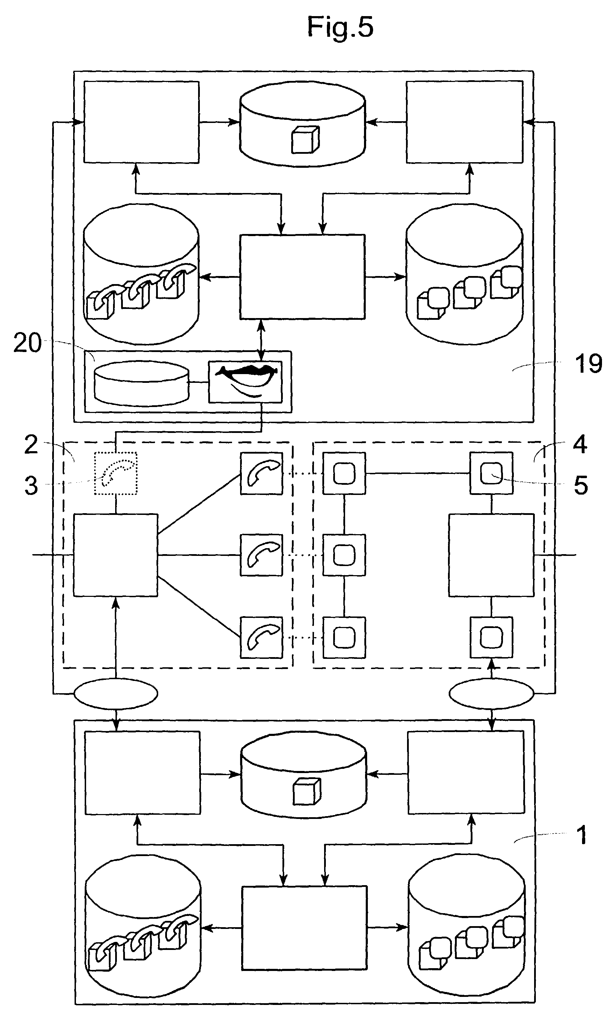

Nach Fig. 5 ist ein CTI-Rechner 1 sowie parallel ein Sprachsystem 19 als zusätzlicher Schnittstellenrechner, welches ein Sprachmedium 20 beinhaltet, sowohl mit einer optional am übergeordneten Netz angebundenen TKA 2, inklusive Telekommunikationsendgeräten 3 am internen Telekommunikationsnetz, als auch mit einer optional am übergeordneten Netz angebundenen EDVA 4, inklusive Datenendgeräten 5 am LAN, verbunden, wobei das Sprachmedium 20 zusätzlich über eine für ein Telekommunikationsendgerät 3 bestimmte Telekommunikationsverbindung mit der TKA 2 verbunden ist. Das Sprachmedium 20 beinhaltet einen Sprachspeicher und ein Sprachmanagement, welches mit dem Ereignishändler des Sprachsystems 19 verbunden ist.

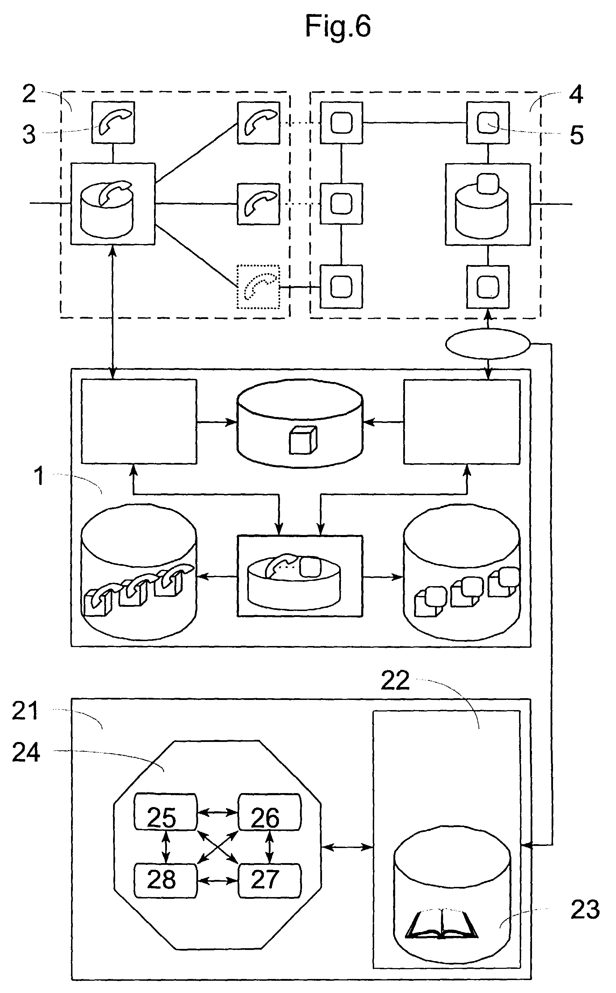

Nach Fig. 6 ist ein CTI-Rechner 1 sowohl mit einer optional am übergeordneten Netz angebundenen TKA 2, inklusive Telekommunikationsendgeräten 3 am internen Telekommunikationsnetz, als auch mit einer optional am übergeordneten Netz angebundenen EDVA 4, inklusive Datenendgeräten 5 am LAN, verbunden, wobei teilweise eine räumliche Zuordnung zwischen den Telekommunikationsendgeräten 3 und den Datenendgeräten 5 und/oder eine Telekommunikationsverbindung zwischen diesen besteht. Über das LAN der EDVA 4 besteht des weiteren eine Verbindung zu einem Unternehmensführungssystem 21, welches ein Kontaktmanagementsystem 22 mit einer Protokolldatenbank 23 beinhaltet, wobei das Kontaktmanagementsystem 22 auf die Grundelemente eines rechnergestützten Warenwirtschaftssystems 24: [Adressen 25; Artikel 26; Konditionen 27; Verfahren 28] zugreift. Es ist vorteilhaft, in das Kontaktmanagementsystem 22 ein Projektverwaltungssystem zu integrieren.

### Verwendete Bezugszeichen

- 1: Schnittstellenrechner / CTI-Rechner
- 2: erstes heterogenes System / TKA
- 3: Telekommunikationsendgerät
- 4: zweite heterogenes System / EDVA
- 5: Datenendgerät
- 6: Konverter
- 7: Basiselementdatenstruktur
- 8: spezifische Klasse
- 9: Ereignishändler
- 10: Zustandsspeicher
- 11: aktueller Zustand
- 12: Graph
- 13: Knoten
- 14: Kante
- 15: Attribut
- 16: Funktion
- 17: Datenbanken
- 18: Kommunikationsdaten
- 19: weiterer Schnittstellenrechner / Sprachsystem
- 20: Sprachmedium
- 21: Unternehmensführungssystem
- 22: Kontaktmanagement
- 23: Protokolldatenbank
- 24: Warenwirtschaftssystem
- 25: Adressen
- 26: Artikel
- 27: Konditionen
- 28: Verfahren

## Patentansprüche

1. Verknüpfung heterogener Systeme, welche ein über Datenverbindungen zwischen einem ersten heterogenen System (2) und einem zweiten heterogenen System (4) angeordneter Schnittstellenrechner (1) ermöglicht,
dadurch gekennzeichnet,
- daß die heterogene systemspezifische Sprache der heterogenen Systeme [(2), (4)] bezüglich ihrer Syntax über Konverter (6) auf eine Zwischensprache mit einer gemeinsamen Basiselementdatenstruktur (7) abgebildet wird,
- daß alle über die spezifische Sprache erzeugbaren bzw. erkennbaren Systemzustände in Form einer als Graphen (12) ausgebildeten Klasse (8) dargestellt und behandelt werden
- und daß die spezifischen Klassen (8) bei der Initialisierung des Schnittstellenrechners (1) generiert und fortan ereignisgesteuert von dem Ereignishändler (9) überwacht und aktualisiert werden.

2. Verknüpfung heterogener Systeme
nach Anspruch 1, dadurch gekennzeichnet,
daß für eine spezifische Sprache in einer spezifischen Klasse (8) jeweils die Knoten (13) die über die Syntax erzeugbaren bzw. erkennbaren Systemzustände und die Kanten (14) die über die Semantik festgelegten zulässigen Änderungen dieser abbilden, wobei die Knoten (13) optional mit einem Status (15) und die Kanten (14) optional mit Funktionen (16) belegt sind, wobei der aktuelle Zustand (11) als Status (15) jeweils genau einem Knoten (13) des Graphen (12) der spezifischen Klasse (8) zugeordnet ist.

3. Verknüpfung heterogener Systeme
nach Anspruch 1 oder Anspruch 2, dadurch gekennzeichnet,
daß die über den Ereignishändler (9) behandelten Ereignisse gerätebezogen und/oder rufbezogen mindestens eine spezifische Klasse (8) ändern und optional erzeugen oder vernichten.

4. Verknüpfung heterogener Systeme
nach einem der Ansprüche 1 bis 3, dadurch gekennzeichnet,
daß als Folge von Änderungen einer spezifischen Klasse (8) des ersten heterogenen Systems (2) der Ereignishändler (9) Befehle für das zweite heterogene System (4) generiert und umgekehrt, wodurch in der Funktion einer Schnittstelle zwischen den heterogenen Systemen [(2), (4)] zumindest jeweils eine Quellklasse und eine Zielklasse geändert wird.

5. Verknüpfung heterogener Systeme
nach einem der Ansprüche 1 bis 4, dadurch gekennzeichnet,
daß bei einer gegebenen Korrelation von Endgeräten [(3), (5)] jeweils beider heterogener Netze [(2), (4)] aus deren Datenbanken (17) die diese Korrelation beschreibenden Kommunikationsdaten (18) vom Ereignishändler (9) erstellt und behandelt sowie optional in einer virtuellen Kommunikationsdatenbank gespeichert werden.

6. Verknüpfung heterogener Systeme
nach einem der Ansprüche 1 bis 5, dadurch gekennzeichnet,
daß bei vollständiger Unabhängigkeit beider heterogener Systeme [(2), (4)], eine Kommunikationsverbindung sowohl innerhalb, als auch zwischen den heterogenen Systemen [(2), (4)] auf Grundlage logischer Kommunikationsdaten (18) gehändelt wird.

7. Verknüpfung heterogener Systeme
nach einem der Ansprüche 1 bis 6, dadurch gekennzeichnet,
daß über eine geeignete grafische Nutzeroberfläche in einfachster Weise die Darstellung der Objekte Knoten (13) und Kanten (14) des Graphen (12) der spezifischen Klasse (8) bzw. der über die korrespondierende Sprache erzeugbaren bzw. erkennbaren Systemzustände sowie objektorientiert deren Modifikation realisierbar ist.

8. Verknüpfung heterogener Systeme
nach einem der Ansprüche 1 bis 7, dadurch gekennzeichnet,
daß das erste heterogene System (2) eine TKA mit Telekommunikationsendgeräten (3) und das zweite heterogene System (4) eine EDVA mit Datenendgeräten (5) bezeichnet.

9. Verknüpfung heterogener Systeme
nach einem der Ansprüche 1 bis 8, dadurch gekennzeichnet,
daß dem Schnittstellenrechner (1) parallel ein weiterer Schnittstellenrechner (19) zugeordnet ist, welcher über die TKA (2) und/oder über das LAN der EDVA (4) einen Anrufer identifiziert und
daß der weitere Schnittstellenrechner (19) optional als Sprachsystem mit einem Sprachmedium (20) ausgeführt ist, welcher optional selbst die spezifischen Erkennungsdaten des Anrufers mittels Sprache ermittelt sowie optional weitere Informationen erfragt und/oder übergibt.

10. Verknüpfung heterogener Systeme
nach Anspruch 8 oder Anspruch 9, dadurch gekennzeichnet,
daß ein Unternehmensführungssystem (21) mit dem LAN der EDVA (4) verbunden ist, welches über ein integriertes Kontaktmanagementsystem (22) teilnehmerspezifisch auf ein rechnergestütztes Warenwirtschaftssystem (24) zugreift und optional diesen Teilnehmern zusätzlich relevante Informationen zur Verfügung stellt.
